Europäisches Patentamt

European Patent Office

Office européen des brevets

(11) Veröffentlichungsnummer: **0 347 406**
**A1**

(12) **EUROPÄISCHE PATENTANMELDUNG**

(21) Anmeldenummer: **89890129.3**

(22) Anmeldetag: **28.04.89**

(51) Int. Cl.⁴: **F 23 G 7/00**

(30) Priorität: **02.05.88 AT 1131/88**

(43) Veröffentlichungstag der Anmeldung:
**20.12.89 Patentblatt 89/51**

(84) Benannte Vertragsstaaten: **AT CH DE GB LI**

(71) Anmelder: **Schindler, Hans**
**Schönbrunner Strasse 2**
**A-1040 Wien (AT)**

(72) Erfinder: **Schindler, Hans**
**Schönbrunner Strasse 2**
**A-1040 Wien (AT)**

(74) Vertreter: **Krause, Walter, Dr. Dipl.-Ing.**
**Postfach 200 Singerstrasse 8**
**A-1014 Wien (AT)**

(54) **Müllverbrennungsanlage.**

㊼ Um bei einer Müllverbrennungsanlage mit Sortiereinrichtung und dieser nachgeordneter Verbrennungs- und Rauchgasreinigungseinrichtung, sowie einem Energiewandler eine optimale Nutzung zu ermöglichen und gleichzeitig die durch eine Produktionsstätte bedingte Umweltbelastung zu vermindern, ist vorgesehen, daß Leitungen (30 bis 35) vorgesehen sind, die die Müllverbrennungsanlage mit einer in deren Nähe angeordneten Produktionsstätte mit zumindest einer Produktionsanlage (21, 22, 23) verbinden, wobei Leitungen (32, 34) die die Abgase der Produktionsstätte führen, in die als Hochtemperatur-Verbrennungseinrichtung ausgebildete Verbrennungseinrichtung (9) oder die Rauchgasreinigungseinrichtung (12) der Müllverbrennungsanlage münden, und weitere Leitungen (31, 35) vorgesehen sind, die den Energiewandler (26) und die Verbrennungseinrichtung (9) mit Verbrauchern, der Produktionsstätte verbinden und die gewonnene Energie, insbesondere Wärmeenergie und/oder elektrische Energie, der Produktionsstätte zuführen.

EP 0 347 406 A1

# Beschreibung

## Müllverbrennungsanlage

Die Erfindung bezieht sich auf eine Müllverbrennungsanlage mit Sortiereinrichtung und dieser nachgeordneter Verbrennungs- und Rauchgasreinigungseinrichtung, sowie einem Energiewandler.

Es ist heute Stand der Technik und allgemein üblich, daß die Problemstellungen Abfallbeseitigung durch thermische Verwertung und Abgasreinigung industrieller Schadstoffe vollkommen getrennt behandelt werden, wobei Kapitalzuschüsse und Förderungen unerläßlich sind.

So werden Müllverbrennungsanlagen zumeist in Ballungs- oder Zentralräumen errichtet, wobei diese bisher stets für sich errichtet und betrieben wurden. Dabei muß der anfallende Müll, darunter auch der aus Industriebetrieben und anderen Produktionsstätten anfallende Müll oft über erhebliche Strecken angeliefert werden, was mit entsprechenden Kosten verbunden ist. Außerdem kann in einem solchen Falle die bei der Verbrennung anfallende Energie, insbesondere die anfallende Wärmeenergie nur mit einem erheblichen, durch den Bau von entsprechenden Fernwärmenetzen bedingte Aufwand genutzt werden. Dabei ergibt sich überdies noch das Problem, daß bei vielen Abnehmern von Fernwärme, diese nicht über das ganze Jahr bezogen wird, zumindest aber sehr starke, saisonbedingte Schwankungen bei der Abnahme der Wärme auftreten, insbesondere wenn die Abnehmer im wesentlichen Wohnhäuser, Schwimmbäder u.dgl. sind, bei denen starke Schwankungen in der Abnahme der Fernwärme auftreten.

Um bei solchen Bedingungen eine gewisse Anpassung vornehmen zu können, wäre es erforderlich eine entsprechend große Deponie vorzusehen um in Zeiten eines geringeren Wärmebedarfes weniger, und in Zeiten eines höheren Wärmebedarfes mehr Müll verbrennen zu können.

Ein weiteres Problem ist auch durch Industriebetriebe gegeben, die einen erheblichen Schadstoffausstoß verursachen, bei denen aber oft der Einbau von Abgasreinigungseinrichtungen aufgrund eines zu geringen Abgasanfalles aus wirtschaftlichen Gründen kaum zu vertreten ist.

Alle bisherigen technischen Einrichtungen konzentrieren sich demnach entweder auf eine entsprechende Technologie der Müllverbrennung mit anschließender Abgasreinigung oder einer Technologie, die ausschließlich dem Zweck der industriellen Schadstoffentsorgung bzw. Abgasreinigung dient.

Ziel der Erfindung ist es, eine Anlage mit Müllverbrennung vorzuschlagen, die es ermöglicht die Belastung der Umwelt mit gerinstmöglichem konstruktiven Aufwand zu senken.

Erfindungsgemäß wird dies dadurch erreicht, daß Leitungen vorgesehen sind, die die Müllverbrennungsanlage mit einer in deren Nähe angeordneten Produktionsstätte mit zumindest einer Produktionsanlage verbinden, wobei Leitungen die die Abgase der Produktionsstätte führen, in die als Hochtemperatur-Verbrennungseinrichtung ausgebildete Verbrennungseinrichtung oder die Rauchgasreinigungseinrichtung der Müllverbrennungsanlage münden, und weitere Leitungen vorgesehen sind, die den Energiewandler und die Verbrennungseinrichtung mit Verbrauchern der Produktionsstätte verbinden und die gewonnene Energie, insbesondere Wärmeenergie und/oder elektrische Energie, der Produktionsstätte zuführen.

Die erfindungsgemäße Verknüpfung einer Müllverbrennungsanlage mit einer industriellen Betriebsstätte, welche ein Kreislaufsystem darstellt, hat eine große volkswirtschaftliche Bedeutung, da es erstmals möglich ist, zwei akute, die Allgemeinheit im höchsten Maße belastende Probleme ideal - und dies auch noch mit kommerziellem Gewinn - zu lösen.

Erst durch das gegenständliche Kreislaufsystem ist es möglich, die aus der industriellen Produktion entstehenden schädlichen Abgase der Verbrennungsluft einem neben dem Industriewerk errichteten Müllkraftwerk zuzuführen, um sie dann über eine Hochtemperaturverbrennung mit fraktionierter Kondensation zu zerlegen oder deren nicht thermisch verwertbare Bestandteile direkt der Rauchgasreinigung zuzuführen.

Durch diese Maßnahmen gelingt es auch den bei Produktionsbetrieben anfallenden, oft problematischen Müll, rasch und ohne nennenswerte Zwischenlagerung entsorgen zu können, wobei die Müllverbrennungsanlage durch die gleichbleibende Energieabgabe an die Produktionsstätte unter weitgehend konstanten Bedingungen betrieben werden kann. Beispielsweise ist durch die Ausbildung der Verbrennungseinrichtung als Hochtemperatur-Verbrennungseinrichtung ein Verbrennen von Holz- und Spanplattenabfällen ohne eine nennenswerte Belastung der Umwelt möglich. Gleiches gilt auch bezüglich von Leder oder Kunststoffabfällen, bei denen es sich auch um chlorierte Kohlenwasserstoffe handeln kann, und ähnlich problematischen Abfällen.

Weiters kann vorgesehen sein, daß der Rauchgasreinigungsanlage eine Abwasseraufbereitungseinrichtung nachgeschaltet ist, die mit einer Frischwasserquelle und ausgangsseitig mit dem Energiewandler und bzw. oder mit einer oder mehrerer Produktionsanlagen verbunden ist und Prozeßwasser liefert.

Durch diese Maßnahmen gelingt es einerseits mit einem geringen Frischwassereinsatz das Auslangen zu finden und anderseits kann der dabei anfallende Schlamm und die anfallenden Feststoffe der Verbrennungseinrichtung zugeführt und dadurch weitgehend entsorgt werden. Außerdem ist es dadurch auch möglich mit einer Anlage sowohl die Müllverbrennungsanlage, wie auch die Produktionsanlagen mit Prozeßwasser zu versorgen.

Bei einer bevorzugten Ausführungsform der Erfindung kann weiters vorgesehen sein, daß von verschiedenen Produktionsanlagen für verschiedene Arten von anfallenden Abfällen vorgesehenen Leitungen zu einzelnen Stufen der Müllaufbereitung, wie Grob-und Feinzerkleinerung oder Recycling bzw. Sortiereinrichtung führen.

Dadurch kann der bei den jeweiligen Produktionsanlagen anfallende Müll jener Stufe der mehrstufigen Müllaufbereitung zugeführt werden, die der Art des anfallenden Mülls am besten entspricht, sodaß dies diesen vorgeschaltete Stufen nicht unnötig belastet werden.

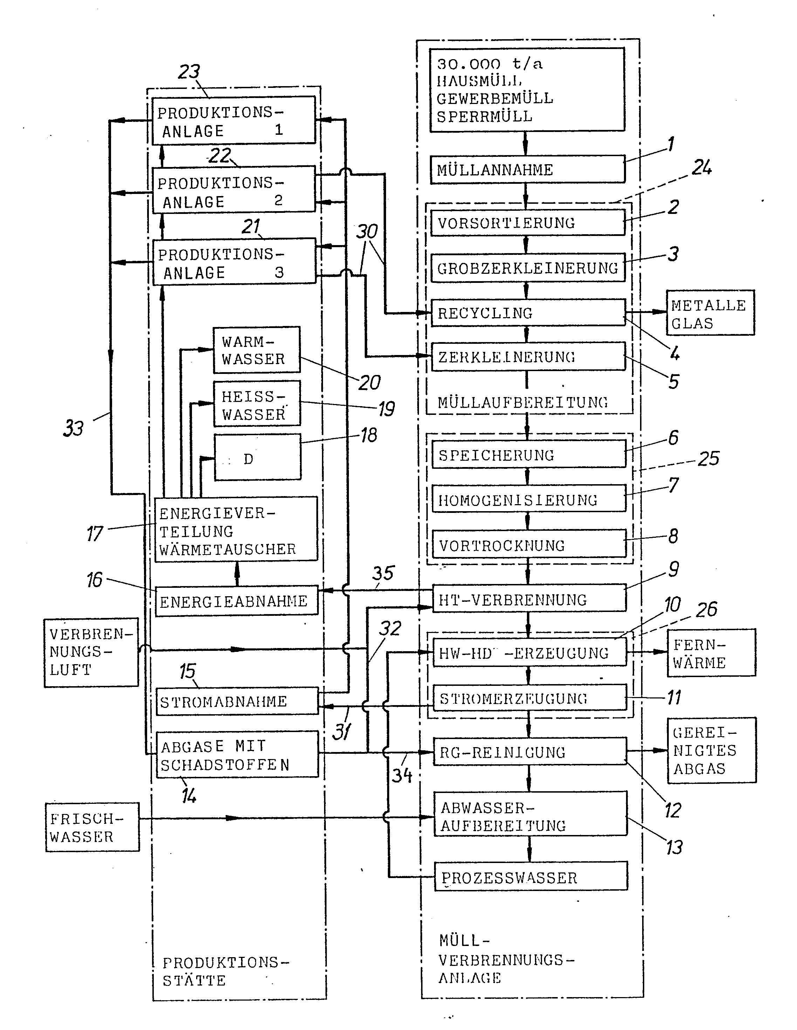

Die Erfindung wird nun anhand der Zeichnung, die schematisch eine erfindungsgemäße Anlage zeigt, näher erläutert.

Die eigentliche Müllverbrennungsanlage besteht im wesentlichen aus der Müllaufnahme 1 für Hausmüll, Gewerbemüll und Sperrmüll, die auch eine kleine Zwischendeponie umfassen kann, einer dieser nachgeordneten mehrstufigen Müllaufbereitungseinrichtung 24, einer ebenfalls mehrstufigen Müllkonditionierung 25, der eine Hochtemperatur-Verbrennungseinrichtung 9 nachgeschaltet ist, sowie einem Energiewandler 26 und einer Rauchgasreinigungsanlage 12 und einer Abwasseraufbereitung 13.

Dieser Müllverbrennungsanlage ist eine Produktionsstätte benachbart, die mehrere Produktionsanlagen 21 bis 23 aufweist, in denen verschiedener Abfall anfällt. Bei diesen Anlagen kann es sich z.B. um eine Spanplattenproduktion, eine Lackiererei, eine Kunststoff verarbeitende Produktionsanlage, eine Gerberei, Lederverarbeitung u.dgl. mehr handeln. Die in diesen Produktionsanlagen 21 bis 23 anfallenden Abfälle werden getrennt gesammelt und über entsprechende Leitungen 30, bzw. Fördereinrichtungen in die entsprechenden Stufen der Müllaufbereitung 24 eingeleitet.

Dabei kann die Müllaufbereitung 24 z.B. eine Vorsortierstufe 2, eine dieser nachgeschalteten Grobzerkleinerung 3, eine Recyclingstufe 4, in der verwertbare Bestandteile des Mülls, wie z.B. Metalle, Glas usw. aussortiert werden, aufweisen. Weiters kann die Müllaufbereitung auch noch eine Zerkleinerungsstufe 5 umfassen.

Die ebenfalls mehrstufige Müllkonditionierung 25 kann neben einem Speicher 6 für den aufbereiteten und zerkleinerten Müll eine Homogenisiereinrichtung 7 und eine Vortrocknung 8 umfassen, nach deren Durchlaufen der Müll in die Hochtemperatur-Verbrennungseinrichtung 9 gelangt und dort bei hohen Temperaturen, z.B. bei mehr als 800°C, vorzugsweise bei mehr als 1200°C, verbrannt wird.

Dieser Verbrennungseinrichtung 9 wird über die Leitung 35 Energie in Form von Wärme über die Energieabnahmestufe 16 der Produktionsstätte entnommnen und einem Verteiler 17 zugeführt, der im wesentlichen aus mehreren Wärmetauschern gebildet ist und ausgangsseitig z.B. eine Warmwasserentnahme 20, eine Entnahme 19 für Heißwasser mit z.B. 120 bis 160°C die beispielsweise zur Versorgung von verschiedenen Produktionsanlagen oder auch z.B. von Waschanlagen, und eine Entnahme für Niederdruckdampf 18 aufweist, der ebenfalls Produktionsanlagen zugeführt werden kann. Dieser Verteiler kann selbstverständlich beliebig ausgelegt sein und richtet sich nach dem jeweiligen Verbrauchsprofil der Produktionsstätte.

Weiters wird die bei der Hochtemperatur-Verbrennungseinrichtung 9 freigesetzte Wärmeenergie auch dem Energiewandler 26 zugeführt, der einen Hochdruck-Heißwasser-Erzeuger 10 und einen Stromerzeuger 11 aufweisen kann. Der Hochruck-Heißwasser-Erzeuger kann für die Speisung eines Fernwärmenetzes verwendet werden.

Der vom Energiewandler in der Stromerzeugungsstation 11 erzeugte elektrische Strom, wird über die Leitung 31 von der Stromabnahmestation 15 abgenommen und kann zweckmäßigerweise für die Deckung des Strombedarfes für die Müllverbrennungsanlage, der im wesentlichen durch die erforderlichen Gebläse und Transporteinrichtungen gegeben ist und zur zumindest teilweisen Deckung des Strombedarfes der Produktionsanlagen verwendet werden, wie dies in der Zeichnung angedeutet ist.

Der Hochtemperatur-Verbrennungseinrichtung 9 ist weiters eine Rauchgasreinigung 12 nachgeschaltet, die als Naßreinigung ausgebildet sein kann. In diesem Falle ist der Rauchgasreinigung 12 zweckmäßigerweise eine Abwasseraufbereitungsanlage 13 nachgeschaltet, die Prozesswasser liefert. Letzteres wird hauptsächlich dem Hochdruck-Heißwasser-Erzeuger 10 zugeführt, kann aber auch den verschiedenen Produktionsanlagen 21 bis 23 zugeführt werden.

Die bei den verschiedenen Produktionsanlagen anfallenden Abgase, z.B. von Produktionsanlagen zur Erzeugung chemischer Produkte, Härtereien, Galvanisieranlagen Lackierereien, Spanplattenwerken u. dgl. werden über Rohrleitungen 33 einem Sammler 14 zugeführt, von dem die Abgase über die Leitung 32 der Hochtemperatur-Verbrennungseinrichtung 9 oder über die Leitung 34 der Rauchgasreinigung 12 zugeführt werden.

Dadurch können die entsprechenden für eine Müllverbrennungsanlage ohnehin erforderlichen Einrichtungen auch gleichzeitig zur Verminderung des Schadstoffausstoßes der Produktionsstätte verwendet werden.

Gleichzeitig ist durch die Produktionsstätte auch eine über das gesamte Jahr über weitgehend konstant bleibende Abnahme von Wärmeenergie und Strom gesichert. Da auf lange Übertragungsleitungen verzichtet werden kann, ist eine sehr hohe Ausnutzung der Energie des Mülls möglich.

Als Beispiel sei ein Spanplattenwerk angeführt, welches einen Energiebedarf von rund 80 MWh/a aufweist und über eine Ölheizung sowie über eine direkt befeuerte Trockenanlage verfügt. Der komunale Bereich, in dem das Spanplattenwerk steht, hat beispielsweise ein Müllaufkommen von rund 30.000 t/a an Haus-, Gewerbe- und Sperrmüll. Die daraus erzielbare Wärmeenergie durch thermische Verwertung beträgt 110 MWh/a, wobei durch die eigenen Prozesse innerhalb der Müllaufbereitung, Abgasreinigung, weitere rund 30 MWh/a benötigt werden, sodaß eine verfügbare Wärmeenergie von rund 80 MWh/a vorhanden ist. Führt man diese Energiemenge dem Industriewerk zu, erspart man sich die Verbrennung der entsprechenden Schwerölmenge. Übrig bleiben die Abgase aus industriellen Prozessen, zum Teil nicht brennbar, die wie schon erwähnt, der Verbrennungsluft bzw. als Teilstrom der Abgasreinigung des Müllkraftwerkes zugeführt werden, womit der Kreislauf geschlossen ist.

## Patentansprüche

1. Müllverbrennungsanlage mit Sortiereinrichtung und dieser nachgeordneter Verbrennungs- und Rauchgasreinigungseinrichtung, sowie einem Energiewandler, **dadurch gekennzeichnet**, daß Leitungen (30 bis 35) vorgesehen sind, die die Müllverbrennungsanlage mit einer in deren Nähe angeordneten Produktionsstätte mit zumindest einer Produktionsanlage (21, 22, 23) verbinden, wobei Leitungen (32, 34) die die Abgase der Produktionsstätte führen, in die als Hochtemperatur-Verbrennungseinrichtung ausgebildete Verbrennungseinrichtung (9) oder die Rauchgasreinigungseinrichtung (12) der Müllverbrennungsanlage münden, und weitere Leitungen (31, 35) vorgesehen sind, die den Energiewandler (26) und die Verbrennungseinrichtung (9) mit Verbrauchern der Produktionsstätte verbinden und die gewonnene Energie, insbesondere Wärmeenergie und/oder elektrische Energie, der Produktionsstätte zuführen.

2. Müllverbrennungsanlage nach einem der Ansprüche 1, **dadurch gekennzeichnet**, daß der Rauchgasreinigungsanlage (12) eine Abwasseraufbereitungseinrichtung (13) nachgeschaltet ist, die mit einer Frischwasserquelle und ausgangsseitig mit dem Energiewandler (26) und bzw. oder mit einer oder mehreren Produktionsanlagen (21, 22, 23) verbunden ist und Prozeßwasser liefert.

3. Müllverbrennungsanlage nach Anspruch 1 oder 2, **dadurch gekennzeichnet**, daß von verschiedenen Poduktionsanlagen (21, 22, 23) für verschiedene Arten von anfallenden Abfällen vorgesehene Leitungen (30) zu einzelnen Stufen der Müllaufbereitung (24), wie Grob- und Feinzerkleinerung (3, 5) oder Recycling (4) bzw. Sortiereinrichtung (2) führen.

PRODUKTIONS-ANLAGE 1 — 23

PRODUKTIONS-ANLAGE 2 — 22

PRODUKTIONS-ANLAGE 3 — 21

30.000 t/a HAUSMÜLL GEWERBEMÜLL SPERRMÜLL

MÜLLANNAHME — 1

VORSORTIERUNG — 2 — 24

GROBZERKLEINERUNG — 3

RECYCLING — 4 → METALLE GLAS

ZERKLEINERUNG — 5

MÜLLAUFBEREITUNG

WARM-WASSER — 20

HEISS-WASSER — 19

D — 18

SPEICHERUNG — 6 — 25

HOMOGENISIERUNG — 7

VORTROCKNUNG — 8

ENERGIEVER-TEILUNG WÄRMETAUSCHER — 17

ENERGIEABNAHME — 16 — 35

HT-VERBRENNUNG — 9

VERBREN-NUNGS-LUFT

HW-HD-ERZEUGUNG — 10 — 26 → FERN-WÄRME

STROMABNAHME — 15 — 32 — 31

STROMERZEUGUNG — 11

ABGASE MIT SCHADSTOFFEN — 14 — 34

RG-REINIGUNG — 12 → GEREI-NIGTES ABGAS

FRISCH-WASSER

ABWASSER-AUFBEREITUNG — 13

PROZESSWASSER

PRODUKTIONS-STÄTTE

MÜLL-VERBRENNUNGS-ANLAGE

33 30

| | EINSCHLÄGIGE DOKUMENTE | | EP 89890129.3 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| Y | US - A - 4 682 548 <br> (PENG) <br>     * Fig. 1,18 * <br> -- | 1-3 | F 23 G 7/00 | |
| Y | BRENNSTOFF-WÄRME-KRAFT, <br> Band 32, Nr. 9, September <br> 1980, Düsseldorf, VDI-Verlag <br> GmbH <br> B.BRAUN, H.LAUER "Energiege- <br> winnung aus kommunalen und <br> industriellen Abfällen unter <br> besonderer Berücksichtigung <br> der Klärschlammverbrennung" <br> Seiten 355-359 <br>     * Seite 358, Spalte 3, <br>       Zeile 6 - Seite 359, Spalte <br>       2, Zeile 6; Bild 8 * <br> -- | 1-3 | | |
| A | DE - A1 - 2 638 105 <br> (ENERTHERM) <br>     * Seite 10, Zeilen 8,9; <br>       Fig. 1 * <br> -- | 1 | RECHERCHIERTE SACHGEBIETE (Int. Cl.4) | |
| A | DE - A - 2 038 545 <br> (COMBUSTION POWER) <br>     * Fig. 1-3 * <br> -- | 1,2 | F 23 G 5/00 <br> F 23 G 7/00 | |
| A | US - A - 4 121 524 <br> (VOELSKOW et al.) <br>     * Fig. 1A * <br> ---- | | | |

Der vorliegende Recherchenbericht wurde für alle Patentansprüche erstellt.

| Recherchenort <br> WIEN | Abschlußdatum der Recherche <br> 29-09-1989 | Prüfer <br> TSCHÖLLITSCH |
|---|---|---|

KATEGORIE DER GENANNTEN DOKUMENTEN
X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
     nach dem Anmeldedatum veröffentlicht worden ist
D : in der Anmeldung angeführtes Dokument
L : aus andern Gründen angeführtes Dokument

& : Mitglied der gleichen Patentfamilie, überein-
     stimmendes Dokument

EPA Form 1503 03 82